# EUROPÄISCHE PATENTSCHRIFT

(11) **EP 3 529 097 B1**
(45) Veröffentlichungstag und Bekanntmachung des Hinweises auf die Patenterteilung: **01.05.2024**
(21) Anmeldenummer: 17791330.8
(22) Anmeldetag: 19.10.2017
(51) Int. Cl.: B60K 6/48, B60K 6/547, B60K 6/36, B60K 6/387, B60K 6/40

(54) **ANTRIEBSBAUGRUPPE MIT E-MASCHINE FÜR EIN KRAFTFAHRZEUG**
DRIVETRAIN MODULE COMPRISING ELECTRIC MACHINE FOR VEHICLE
GROUPE MOTOPROPULSEUR AVEC MACHINE ÉLECTRIQUE POUR VÉHICULE AUTOMOBILE

(30) Priorität: 20.10.2016 DE 102016120010
(43) Veröffentlichungstag der Anmeldung: 28.08.2019
(73) Patentinhaber: Getrag Ford Transmissions GmbH, 50735 Köln (DE)
(72) Erfinder: QUAST, Joerg-Rainer, 50858 Köln (DE); KAMES, Josef, 41352 Korschenbroich (DE)
(74) Vertreter: Wagner Albiger & Partner Patentanwälte mbB
(86) Internationale Anmeldenummer: PCT/EP2017/076778
(87) Internationale Veröffentlichungsnummer: WO 2018/073378

(56) Entgegenhaltungen:
- EP-A1- 1 693 238
- EP-A1- 2 946 958
- WO-A1-2013/007886
- DE-A1- 19 901 849
- DE-A1-102015 216 495

## Beschreibung

Die Erfindung betrifft eine Antriebsbaugruppe für ein Kraftfahrzeug, welche ein Hauptgetriebe mit einer Eingangswelle und wenigstens eine erste Ausgangswelle sowie eine E-Maschine aufweist, wobei sich die Eingangswelle des Hauptgetriebes mit einem Verbrennungsmotor in dem Kraftfahrzeug koppeln lässt.

Eine derartige Antriebsbaugruppe ist aus der EP2 946 958 A1, der WO 2013/007886 A1 oder der DE 10 2015 216 495 A1 bekannt. Bei normaler Fahrt läuft der Drehmomentfluss von dem Verbrennungsmotor durch das Hauptgetriebe zu einem Abtrieb des Kraftfahrzeugs. Wird für die starke Beschleunigung des Kraftfahrzeugs viel Drehmoment benötigt, lässt sich die E-Maschine über ein Nebengetriebe mit dem Hauptgetriebe koppeln, so dass das Drehmoment des Verbrennungsmotors und das Drehmoment der E-Maschine gleichzeitig zur Verfügung stehen. Im Innenstadtbereich kann das Kraftfahrzeug auch ohne Verbrennungsmotor nur mit Hilfe der E-Maschine angetrieben werden. Üblicherweise wird die E-Maschine auch als Generator zum Aufladen einer Batterie verwendet, wenn beispielsweise das Kraftfahrzeug abgebremst wird.

In dem Hauptgetriebe der Antriebsbaugruppe ist auf der ersten Ausgangswelle drehfest ein erstes Ritzel angeordnet, das mit einem um eine Ringradachse drehbaren Ringrad in kämmendem Eingriff steht. Das Ringrad ist dabei mit wenigstens einer Abtriebswelle des Kraftfahrzeugs koppelbar. Das Ringrad kann dabei drehfest mit einem Gehäuse eines Differenzials verbunden sein, das die Antriebsenergie auf die Abtriebswelle und eine zweite Abtriebswelle aufteilt. Das Hauptgetriebe weist mehrere schaltbare Gänge auf, wobei einem Gang ein Zahnradverbund zugeordnet ist, der ein Festrad und ein schaltbares Losrad umfasst, um ein Drehmoment des Verbrennungsmotors von der Eingangswelle auf die Ausgangswelle und somit über das Ringrad auf die wenigstens eine Abtriebswelle zu übertragen. Die E-Maschine weist eine Antriebswelle auf, die zur Eingangswelle, zur Ausgangswelle und zur Ringsradachse parallel verläuft. Ein Nebengetriebe, dass ein auf der Antriebswelle der E Maschine angeordnetes Antriebszahnrad, wenigstens eine erste Welle und eine zweite Welle aufweist, auf der drehfest ein zweites Ritzel angeordnet ist, ist mit dem Hauptgetriebe in der Weise gekoppelt, dass das zweite Ritzel mit dem Ringrad des Hauptgetriebes im kämmenden Eingriff steht. Ein Drehmoment der E-Maschine wird somit über das Nebengetriebe direkt auf das Ringrad übertragen.

Das Nebengetriebe weist wenigstens zwei schaltbare Nebengänge auf, wobei einem Nebengang ein Zahnradverbund zugeordnet ist, der ein Festrad und ein schaltbares Losrad umfasst, um ein Drehmoment von der Antriebswelle der E-Maschine zu der zweiten Welle zu übertragen, wobei die Drehmomentübertragung von der Antriebswelle zu der zweiten Welle nur durch einen kämmenden Eingriff zusammenwirkender Zahnräder übertragen wird.

Wegen verschärfter Abgasnormen und dem ständigen Bedarf an Verbrauchsreduktionen werden Kombinationen aus Verbrennungsmotoren und E-Maschinen (Hybrid-Antriebe) für Kraftfahrzeuge weiter an Bedeutung gewinnen. Der Einsatz von Hybrid-Antrieben stellt insbesondere bei kleinen Kraftfahrzeugen hohe Anforderungen an das Packaging, also an die optimale Ausnutzung des begrenzt vorhandenen Raumes. Der Erfindung liegt daher die Aufgabe zu Grunde, eine Antriebsbaugruppe mit E-Maschine bereit zu stellen, die kompakt baut und sich insbesondere für Kraftfahrzeug mit Frontantrieb eignet, bei denen der Verbrennungsmotor quer zur Fahrtrichtung eingebaut ist.

Die der Erfindung zugrundeliegende Aufgabe wird mit der Merkmalskombination gemäß Anspruch 1 gelöst. Bevorzugte Ausführungsbeispiele können den Unteransprüchen entnommen werden.

Erfindungsgemäß ist vorgesehen, dass die Antriebswelle der E-Maschine jeweils von der Ringradachse, der Eingangswelle und der Ausgangswelle des Hauptgetriebes beabstandet ist. Somit ist es möglich, die E-Maschine seitlich neben der Eingangswelle und der Ausgangswelle des Hauptgetriebes anzuordnen. Erfindungsgemäß ist die erste Ausgangswelle oberhalb einer ersten Verbindungsgeraden, die sich zwischen der Eingangswelle und der Ringradachse des Ringrads erstreckt, angeordnet, wobei die Antriebswelle der E-Maschine, die erste Welle und die zweite Welle des Nebengetriebes unterhalb der ersten Verbindungsgeraden angeordnet sind. Die erste Verbindungsgerade verbindet somit die Drehachse der Eingangswelle mit der Drehachse des Ringrads. Die Begriffe oberhalb/unterhalb sollen lediglich ausdrücken, dass sich die erste Ausgangswelle auf einer anderen Seite der ersten Verbindungsgeraden befindet als die Antriebswelle der E-Maschine, die erste Welle und die zweite Welle.

In einem bevorzugten Ausführungsbeispiel ist in Einbaulage der Antriebsbaugruppe im Kraftfahrzeug in Fahrtrichtung gesehen die Antriebswelle der E-Maschine vor der Ringradachse angeordnet. Vorzugsweise handelt es sich hier um ein Kraftfahrzeug mit Frontantrieb, in dem der Verbrennungsmotor und das Hauptgetriebe quer zur Fahrtrichtung eingebaut sind.

Das Nebengetriebe kann ein erstes Losrad und ein zweites Losrad aufweisen, die nebeneinander auf einer gemeinsamen Welle angeordnet sind. Vorzugsweise handelt es sich dabei um die zweite Welle, auf der auch das zweite Ritzel angeordnet ist, welches mit dem Ringrad kämmt. Durch die Anordnung der Losräder auf der zweiten Welle lässt sich bei normaler Fahrt, bei der das Kraftfahrzeug über den Verbrennungsmotor angetrieben wird, die Anzahl der mitdrehenden Teile des Teilgetriebes reduzieren. Jedoch ist es auch möglich, das erste Losrad und das zweite Losrad auf der ersten Welle, welche getriebetechnisch näher zur E-Maschine liegt, anzuordnen. Zudem können das erste Losrad auf der ersten Welle und das zweite Losrad auf der zweiten Welle angeordnet sein.

In der Ausführung, in der das erste Losrad und das zweite Losrad auf der zweiten Welle angeordnet sind, ist bevorzugt zwischen dem ersten Losrad und dem zweiten Losrad eine Doppelgangschaltkupplung angeordnet, die in einer ersten Schaltstellung das erste Losrad und in einer zweiten Schaltstellung das zweite Losrad drehfest mit der zweiten Welle verbindet. Die Verwendung einer einzigen Gangschaltkupplung in Form einer Doppelgangschaltkupplung zwischen dem ersten Losrad und dem zweiten Losrad sorgt für einen kompakten Aufbau des Nebengetriebes.

In einem Ausführungsbeispiel ist in einer Neutralstellung der Doppelgangschaltkupplung weder das erste Losrad noch das zweite Losrad drehfest mit der zweiten Welle verbunden. Wird also das Kraftfahrzeug ausschließlich durch den Verbrennungsmotor angetrieben, lässt sich die E-Maschine und auch das Teilgetriebe mit Ausnahme der zweiten Welle von dem Hauptgetriebe entkoppeln.

Die Losräder können in axialer Richtung gesehen, also in einer Richtung parallel zu der Eingangswelle, Ausgangswelle, Ringradachse, erster Welle und zweiter Welle, zwischen einer Ebene, in der das Antriebszahnrad der E-Maschine liegt, und einer Ebene angeordnet sein, in der das zweite Ritzel liegt. Dabei kann das Antriebszahnrad direkt mit einem Transferrad auf der ersten Welle kämmen oder zumindest in der Ebene kämmen, in der das Transferrad liegt. Vorzugsweise stellt das Transferrad ein äußeres Zahnrad auf der ersten Welle dar.

Ein Steuerungsmodul für die E Maschine ist erfindungsgemäß in axialer Richtung gesehen neben der E-Maschine angeordnet. Bei dem Steuerungsmodul kann es sich beispielsweise um einen Inverter handeln, der eine elektrische Gleichspannung in Wechselspannung und umgekehrt umwandelt. Somit lässt sich die E-Maschine durch eine Batterie mit Gleichspannung antreiben, wobei die elektrische Energie von der Batterie über den Inverter zur E-Maschine geführt wird. Umgekehrt, im Generatorbetrieb, wird die durch die E-Maschine erzeugte Wechselspannung in Gleichspannung umgewandelt, um die Batterie aufladen zu können.

Erfindungsgemäß weist das Nebengetriebe ein Zwischenrad auf einer Zusatzwelle auf, welches mit dem Antriebszahnrad der E-Maschine und einem Zahnrad auf der ersten Welle kämmt. Vorzugsweise ist das Zahnrad das Transferrad auf der ersten Welle, welches in axialer Richtung neben den Losrädern angeordnet ist.

Erfindungsgemäß ist die Zusatzwelle in einem Zwischenraum zwischen dem Steuerungsmodul und der E-Maschine angeordnet.

Ein Abstand zwischen der Antriebswelle der E-Maschine und der Eingangswelle des Hauptgetriebes kann kleiner sein als der Abstand zwischen der Eingangswelle und der Ringradachse. Zudem kann ein Abstand zwischen der Ringradachse und der Antriebswelle der E-Maschine größer sein als ein Abstand zwischen der Ringradachse und der Eingangswelle des Hauptgetriebes. Bei den Abständen soll es sich um Achsabstände handeln, so dass bei einer Welle deren Drehachse als Bezug zu wählen ist.

In einem Ausführungsbeispiel weist das Hauptgetriebe zur Realisierung eines Rückwärtsgangs eine zweite Ausgangswelle mit einem dritten Ritzel auf, welches mit dem Ringrad kämmt. Die zweite Ausgangswelle dient vorzugsweise ausschließlich zur Realisierung des Rückwärtsgangs, d.h., weitere Zahnräder auf der zweiten Ausgangswelle, die einem Vorwärtsgang des Hauptgetriebes zugeordnet werden können, sind nicht vorhanden.

Die erste Ausgangswelle und die Eingangswelle können oberhalb einer zweiten Verbindungsgeraden, die sich zwischen der Antriebswelle der E-Maschine und der Ringradachse des Ringrads erstreckt, angeordnet sein, während die erste Welle und die zweite Welle des Nebengetriebes unterhalb der zweiten Verbindungsgeraden angeordnet sind.

Die Zusatzwelle kann ebenfalls unterhalb der ersten Verbindungsgeraden und/oder unterhalb der zweiten Verbindungsgeraden liegen, also auf der anderen Seite der betreffenden Verbindungsgeraden, auf der die Ausgangswelle des Hauptgetriebes liegt.

Anhand eines in der Zeichnung dargestellten Ausführungsbeispiels wird die Erfindung näher erläutert. Es zeigen:
- Figur 1: schematisch einen Radsatz einer Antriebsbaugruppe;
- Figur 2: die räumliche Anordnung der einzelnen Wellen der Antriebsbaugruppe; und
- Figur 3: Figur 2 mit zusätzlichen Verbindungsgeraden

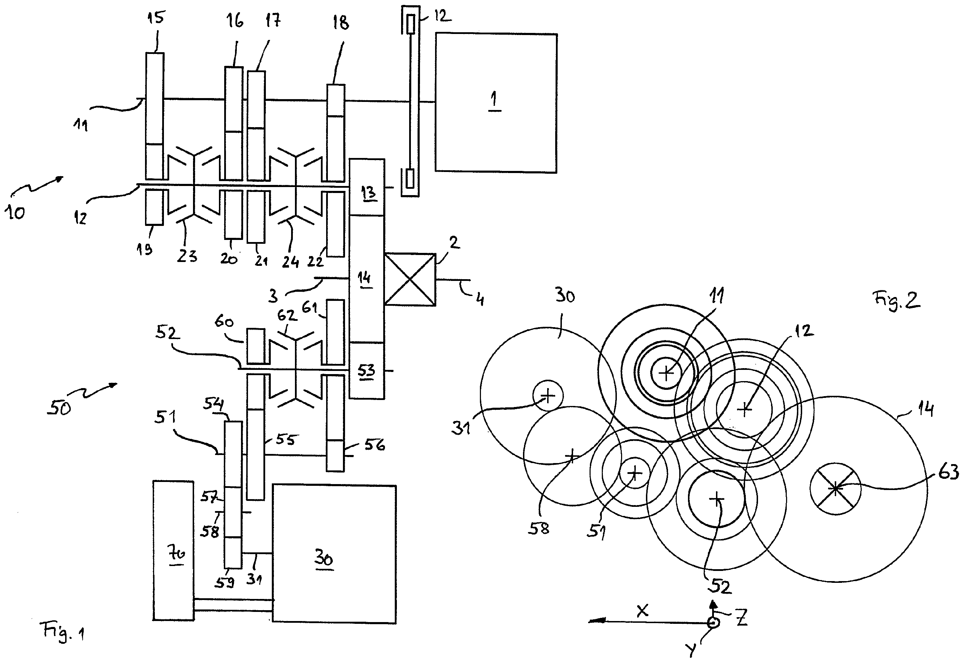

Figur 1 zeigt einen Radsatz einer erfindungsgemäßen Antriebsbaugruppe für ein Kraftfahrzeug, wobei die Antriebsbaugruppe ein Hauptgetriebe 10, eine Elektromaschine (E-Maschine) 30 sowie ein Nebengetriebe 50 aufweist.

Das Hauptgetriebe 10 umfasst eine Eingangswelle 11, die über eine Kupplung 12 mit einem Verbrennungsmotor 1 gekoppelt ist. Parallel zur Eingangswelle 11 ist eine (erste) Ausgangswelle 12 angeordnet, auf der an einem motorseitigen Ende drehfest ein erstes Ritzel 13 angeordnet ist. Das erste Ritzel 13 kämmt mit einem Ringrad 14, welches über ein Differenzial 2 mit einer ersten Abtriebswelle 3 und einer zweiten Abtriebswelle 4 verbunden ist. Über die erste Abtriebswelle 3 lässt sich ein linkes Vorderrad des Kraftfahrzeugs antreiben. Über die zweite Abtriebswelle 4 erfolgt der Antrieb eines rechten Vorderrads des Kraftfahrzeugs. Die Vorderräder des Kraftfahrzeugs sind in Figur 1 nicht dargestellt. Das Hauptgetriebe 10, die E-Maschine 30, das Nebengetriebe 50, der Verbrennungsmotor 1 und die Kupplung 12 können auch als Antriebseinheit bezeichnet werden.

Auf der Eingangswelle 11 sind vier Festräder 15, 16, 17, 18 angeordnet, wobei jeweils ein Festrad mit einem der Losräder 19, 20, 21, 22 auf der Ausgangswelle 12 kämmt. Zur drehfesten Verbindung der Losräder 19, 20 ist eine erste Doppelgangschaltkupplung 23 vorgesehen. Eine zweite Doppelgangschaltkupplung 24 ermöglicht eine drehfeste Verbindung des Losrads 21 bzw. des Losrad 22 mit der Ausgangswelle 12.

Das Hauptgetriebe 10 weist vier Vorwärtsgänge auf, wobei ein erster Vorwärtsgang (mit dem größten Übersetzungsverhältnis) dann eingelegt ist, wenn die Doppelgangschaltkupplung 24 das Losrad 22 drehfest mit der Ausgangswelle 12 verbindet. Bei eingelegtem ersten Vorwärtsgang erfolgt somit ein Drehmomentfluss vom Verbrennungsmotor 1 über die Kupplung 12 auf das Festrad 18, welches über den kämmenden Eingriff mit dem Losrad 22 und der geschlossenen Doppelgangschaltkupplung 24 Drehmoment auf die Ausgangswelle 12 überträgt. Der Drehmomentfluss erfolgt dann weiter über das erste Ritzel 13 auf das Ringrad 14, welches über das Differenzial 2 und die Abtriebswellen 3, 4 die Vorderräder des Kraftfahrzeugs antreibt. Das Hauptgetriebe 10 kann darüber hinaus noch weitere Vorwärtsgänge aufweisen, beispielsweise fünf, sechs oder sieben Vorwärtsgänge. Ein Rückwärtsgang muss nicht notwendigerweise im Hauptgetriebe 10 realisiert sein, da sich ein solcher auch über die E-Maschine 30 und das Nebengetriebe 50 realisieren lässt.

Das Nebengetriebe 50 weist eine erste Welle 51 und eine zweite Welle 52 auf, die sich parallel zu den Wellen 11, 12 des Hauptgetriebes 10 erstrecken. Auf der zweiten Welle 52 sitzt an einem motorseitigen Ende ein zweites Ritzel 53, das mit dem Ringrad 14 im kämmenden Eingriff steht. Somit befinden sich das Ringrad 14 sowie das erste Ritzel 13 und das zweite Ritzel 53 in einer Ebene. Auf der ersten Welle 51 sind drei Zahnräder angeordnet, nämlich ein Transferrad 54 und zwei Festräder 55, 56. Das Transferrad 54, das an einem dem Motor 1 abgewandten Ende angeordnet ist, kämmt mit einem Zwischenrad 57 kämmt, dass auf einer Zusatzwelle 58 angeordnet ist. Das Zwischenrad 57 wiederum kämmt mit einem Antriebszahnrad 59, welches auf einer Antriebswelle 31 der E-Maschine 30 sitzt. Die Antriebswelle 31 verläuft parallel zur ersten Welle 51 und zweiten Welle 52 des Nebengetriebes 50.

Zur Realisierung von zwei schaltbaren Nebengängen sind auf der zweiten Welle 52 ein erstes Losrad 60 und ein zweites Losrad 61 angeordnet, die sich jeweils über eine zwischen den Losrädern 60, 61 angeordnete Doppelgangschaltkupplung 62 drehfest mit der zweiten Welle 52 verbinden lassen. Dabei stellt die Doppelgangschaltkupplung 62 in einer ersten Schaltstellung eine drehfeste Verbindung zwischen dem Losrad 60 und der zweiten Welle 52 dar. In einer zweiten Schaltstellung erfolgt eine drehfeste Verbindung zwischen dem zweiten Losrad 61 und der zweiten Welle 52. Zudem kann die Doppelgangschaltkupplung 62 eine Neutralstellung einnehmen, in der beide Losräder 60, 61 von der zweiten Welle 52 entkoppelt sind.

Die Losräder 60 und 61 liegen jeweils in einer Ebene, die in axialer Richtung gesehen (in der Darstellung der Figur 1 von links nach rechts bzw. von rechts nach links) weiter von dem Verbrennungsmotor 1 entfernt liegen als die Ebene des Ringrads 14. Somit nimmt das Teilgetriebe 50 keinen Bauraum ein, der für die Kupplung 12 vorzusehen ist.

Wird das Kraftfahrzeug über die E-Maschine angetrieben, so erfolgt der Drehmomentfluss von der E-Maschine 30 über die Antriebswelle 31 auf das Antriebszahnrad 59, welches über den kämmenden Eingriff mit dem Zwischenrad 57 Drehmoment auf das Transferrad 54 überträgt. Der Drehmomentfluss erfolgt über die erste Welle 51 auf die Festräder 55, 56. In dem Fall, in dem sich die Doppelgangschaltkupplung 62 in der ersten Schaltstellung befindet, wird Drehmoment von dem Festrad 55 über den kämmenden Eingriff mit dem ersten Losrad 60 auf die zweite Welle 52 übertragen. Schließlich wird das Drehmoment über das zweite Ritzel 53 auf das Ringrad 14, das Differenzial 2 und auf die beiden Abtriebswellen 3, 4 geleitet. Somit erfolgt eine Übertragung des Drehmoments der E-Maschine 30 über das Nebengetriebe 50 direkt auf das Ringrad 14. Zahnräder auf den Wellen 51, 52 stehen somit nicht im direkten kämmenden Kontakt mit Zahnrädern auf den Wellen 11, 12. Auch die Zahnräder der Welle 58 stehen nicht im direkten kämmenden Kontakt mit den Zahnrädern auf den Wellen 11, 12, wie dieses Ausführungsbeispiel zeigt.

In axialer Richtung neben der E-Maschine 30 ist ein Inverter angeordnet, der Gleichspannung in Wechselspannung umwandelt bzw. Wechselspannung in Gleichspannung. Zu erkennen ist, dass in axialer Richtung gesehen das Antriebszahnrad 59 sowie das Zwischenrad 57 zwischen dem Inverter 70 und der E-Maschine 30 angeordnet sind.

Figur 2 zeigt die räumliche Lage der einzelnen Wellen der Antriebsbaugruppe. In Figur 2 ist eine Ringradachse, um die sich das Ringrad 14 dreht, mit 63 bezeichnet. In Figur 2 ist zudem eine Fahrtrichtung X dargestellt, die die räumliche Anordnung der Antriebsbaugruppe im eingebauten Zustand im Kraftfahrzeug zeigen soll. Eine Richtung Z zeigt die vertikale Richtung an. Eine Y-Richtung erstreckt sich quer zur Fahrtrichtung, beispielsweise vom linken Vorderrad zum rechten Vorderrad des Kraftfahrzeugs.

Die einzelnen Wellen der Antriebsbaugruppe verlaufen dabei in Y-Richtung bzw. quer zur Fahrtrichtung X (Vorwärtsfahrtrichtung). Zu erkennen ist, dass in Fahrtrichtung X gesehen die Antriebswelle 31 der E-Maschine 30 vor der Ringradachse 63 angeordnet ist. Auch wird deutlich, dass das Teilgetriebe 50 mit den Wellen 58, 51 und 52 in Einbaulage der Antriebsbaugruppe in Z-Richtung gesehen unterhalb dem Hauptgetriebe 10 mit den Wellen 11, 12 angeordnet ist.

Ein Abstand zwischen der Antriebswelle 31 (bzw. deren Drehachse) und der Ringradachse 63 ist dabei größer als ein Abstand zwischen der Eingangswelle 11 und der Ringradachse 63. Die Distanz zwischen der Antriebswelle 31 der E-Maschine 30 und der Ringradachse 63 wird dabei nur über den kämmenden Eingriff benachbarter Zahnräder realisiert. Es ist nicht notwendig, die Distanz durch Zugmittel wie eine Kette oder dergleichen zu überbrücken. Entsprechend ist das Nebengetriebe 50 frei von Zugmitteln.

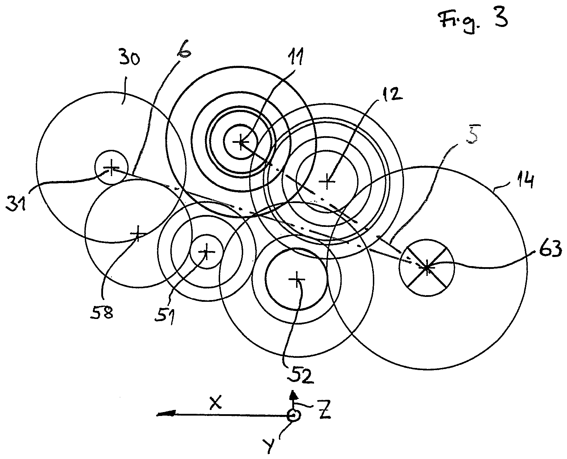

Figur 3 entspricht Figur 2, wobei in Figur 3 zusätzlich eine erste Verbindungsgerade 5 und eine zweite Verbindungsgerade 6 eingezeichnet sind. Die erste Verbindungsgerade 5 (siehe strich-punktierte Linie) erstreckt sich von der Ringradachse 63 des Ringrads 14 bis zu der Eingangswelle 11 bzw. genauer gesagt bis zu deren Drehachse. Die zweite Verbindungsgerade 6 erstreckt sich von der Ringradachse 63 bis zu der Antriebswelle 31 der E-Maschine 30. Zu erkennen ist, dass sich die erste Ausgangswelle 12 oberhalb der ersten Verbindungsgrade 5 befindet, während die erste Welle 51 und die zweite Welle 52 sowie die Zusatzwelle 58 unterhalb der ersten Verbindungsgrade 5 angeordnet sind. Die Wellen 51, 52 und 58 liegen auch unterhalb der zweiten Verbindungsgeraden 6, während oberhalb dieser zweiten Verbindungswellen 6 die Eingangswelle 11 und die erste Ausgangswelle 12 angeordnet sind. Die Anordnung des Nebengetriebes mit den Wellen 51, 52 und 58 entspricht in Einbaulage der Antriebsbaugruppe daher einer Unterflur-Anordnung.

## Patentansprüche

1. Antriebsbaugruppe für ein Kraftfahrzeug, umfassend:
- ein Hauptgetriebe (10), das eine Eingangswelle (11), die sich mit einem Verbrennungsmotor (1) des Kraftfahrzeugs koppeln lässt, wenigstens eine erste Ausgangswelle (12), auf der drehfest ein erstes Ritzel (13) angeordnet ist, ein um eine Ringradachse (63) drehbares Ringrad (14), das mit dem ersten Ritzel (13) in kämmenden Eingriff steht und das mit wenigstens einer Abtriebswelle (3, 4) des Kraftfahrzeugs koppelbar ist, und mehrere schaltbare Gänge aufweist, wobei einem Gang ein Zahnradverbund zugeordnet ist, der ein Festrad und ein schaltbares Losrad umfasst, um ein Drehmoment des Verbrennungsmotors (1) von der Eingangswelle (11) auf die Ausgangswelle (12) zu übertragen,
- eine E-Maschine (30), die eine zur Eingangswelle (11), zur ersten Ausgangswelle (12) und zur Ringradachse (63) parallele Antriebswelle (31) aufweist, und
- ein Nebengetriebe (50), das ein auf der Antriebswelle (31) der E-Maschine angeordnetes Antriebszahnrad (59), wenigstens eine erste Welle (51) und eine zweite Welle (52), auf der drehfest ein zweites Ritzel (53) angeordnet ist, das mit dem Ringrad (14) des Hauptgetriebes (10) im kämmenden Eingriff steht,
wobei die Drehmomentübertragung von der Antriebswelle (31) zu der zweiten Welle (52) nur durch einen kämmenden Eingriff zusammenwirkender Zahnräder übertragbar ist, wobei
- die Antriebswelle (31) der E-Maschine (30) jeweils von der Ringradachse (63), der Eingangswelle (11) und der Ausgangswelle (12) des Hauptgetriebes (10) beabstandet ist,
- die erste Ausgangswelle (12) oberhalb einer ersten Verbindungsgeraden (5), die sich zwischen der Eingangswelle (11) und der Ringradachse (63) des Ringrads (14) erstreckt, angeordnet ist,
- die Antriebswelle (31) der E-Maschine (30), die erste Welle (51) und die zweite Welle (52) unterhalb der ersten Verbindungsgeraden (5) angeordnet sind, **dadurch gekennzeichnet, dass**
- ein Steuerungsmodul für die E-Maschine (30) in axialer Richtung gesehen neben der E-Maschine (30) angeordnet ist,
- das Nebengetriebe (50) wenigstens zwei schaltbare Nebengänge aufweist, wobei einem Nebengang ein Zahnradverbund zugeordnet ist, der ein Festrad und ein schaltbares Losrad umfasst, um ein Drehmoment von der Antriebswelle (31) der E-Maschine (30) zu der zweiten Welle (51) zu übertragen,
- das Nebengetriebe (50) ein Zwischenrad (57) auf einer Zusatzwelle (58) aufweist, welches mit dem Antriebszahnrad (59) der E-Maschine (30) und einem Zahnrad auf der ersten Welle (51) kämmt, und
- die Zusatzwelle (58) in einem Zwischenraum zwischen Steuerungsmodul und E-Maschine (30) angeordnet ist.

2. Antriebsbaugruppe nach Anspruch 1, **dadurch gekennzeichnet, dass** in Einbaulage der Antriebsbaugruppe im Kraftfahrzeug in Fahrtrichtung gesehen die Antriebswelle (31) der E-Maschine (30) vor der Ringradachse (63) angeordnet ist.

3. Antriebsbaugruppe nach Anspruch 1 oder 2, **dadurch gekennzeichnet, dass** das Nebengetriebe (50) ein erstes Losrad (60) und ein zweites Losrad (61) aufweist, die nebeneinander auf der zweiten Welle (52) angeordnet sind.

4. Antriebsbaugruppe nach Anspruch 3, **dadurch gekennzeichnet, dass** zwischen dem ersten Losrad (60) und dem zweiten Losrad (61) eine Doppelgangschaltkupplung (61) angeordnet ist, die in einer ersten Schaltstellung das erste Losrad (60) und in einer zweiten Schaltstellung das zweite Losrad (61) drehfest mit der zweiten Welle (52) verbindet.

5. Antriebsbaugruppe nach Anspruch 3 oder 4, **dadurch gekennzeichnet, dass** das erste Losrad (60) und das zweite Losrad (61) in axialer Richtung gesehen zwischen einer Ebene, in der das Antriebszahnrad (59) der E-Maschine (30) liegt, und einer Ebene angeordnet sind, in der das zweite Ritzel (53) liegt.

6. Antriebsbaugruppe nach einem der Ansprüche 1 bis 5, **dadurch gekennzeichnet, dass** ein Abstand zwischen der Antriebswelle (31) der E-Maschine (30) und der Eingangswelle (11) kleiner ist als der Abstand zwischen der Eingangswelle (11) und der Ringradachse (63).

7. Antriebsbaugruppe nach einem der Ansprüche 1 bis 6, **dadurch gekennzeichnet, dass** ein Abstand zwischen der Ringradachse (63) und der Antriebswelle (31) der E-Maschine (30) größer ist als ein Abstand zwischen der Ringradachse (63) und der Eingangswelle (11) des Hauptgetriebes (10).

8. Antriebsbaugruppe nach einem der Ansprüche 1 bis 7, **dadurch gekennzeichnet, dass** das Hauptgetriebe (10) zur Realisierung eines Rückwärtsgangs eine zweite Ausgangswelle mit einem dritten Ritzel aufweist, welches mit dem Ringrad (14) kämmt.

9. Antriebsbaugruppe nach einem der Ansprüche 1 bis 8, **dadurch gekennzeichnet, dass** die erste Ausgangswelle (12) und die Eingangswelle (11) oberhalb einer zweiten Verbindungsgeraden (6), die sich zwischen der Antriebswelle (31) der E-Maschine (30) und der Ringradachse (63) des Ringrads (14) erstreckt, angeordnet sind, und dass die die erste Welle (51) und die zweite Welle (52) unterhalb der zweiten Verbindungsgeraden (6) angeordnet sind.

## Claims

1. Drive assembly for a motor vehicle, comprising:
- a main transmission (10), which has an input shaft (11), which can be coupled to an internal combustion engine (1) of the motor vehicle, at least one first output shaft (12), on which a first pinion (13) is arranged in a rotationally secure manner, a ring gear (14) which can rotate about a ring gear axis (63), which is in meshing engagement with the first pinion (13) and which can be coupled to at least one driven shaft (3, 4) of the motor vehicle, and has a plurality of shiftable gears, wherein one gear is assigned a gear train which comprises a fixed gear and a shiftable idler gear in order to transmit a torque of the internal combustion engine (1) from the input shaft (11) to the output shaft (12),
- an electric motor (30), which has a drive shaft (31) parallel to the input shaft (11), to the first output shaft (12) and to the ring gear axis (63), and
- an auxiliary transmission (50), which has a drive gear (59) arranged on the drive shaft (31) of the electric motor, at least one first shaft (51) and one second shaft (52), on which a second pinion (53) is arranged in a rotationally secure manner, which pinion is in meshing engagement with the ring gear (14) of the main transmission (10), wherein the torque transmission from the drive shaft (31) to the second shaft (52) can only be transmitted by meshing engagement of interacting gears,
wherein
- the drive shaft (31) of the electric motor (30) is spaced apart from the ring gear axis (63), the input shaft (11) and the output shaft (12) of the main transmission (10) respectively,
- the first output shaft (12) is arranged above a first straight connecting line (5), which extends between the input shaft (11) and the ring gear axis (63) of the ring gear (14),
- the drive shaft (31) of the electric motor (30), the first shaft (51) and the second shaft (52) are arranged below the first straight connecting line (5), **characterized in that**
- a control module for the electric motor (30) is arranged next to the electric motor (30) as viewed in axial direction,
- the auxiliary transmission (50) has at least two shiftable auxiliary gears, wherein an auxiliary gear is assigned a gear train which comprises a fixed gear and a shiftable idler gear in order to transmit a torque from the drive shaft (31) of the electric motor (30) to the second shaft (51),
- the auxiliary transmission (50) has an intermediate gear (57) on an additional shaft (58) which meshes with the drive gear (59) of the electric motor (30) and a gear on the first shaft (51), and
- the additional shaft (58) is arranged in an intermediate space between the control module and electric motor (30).

2. Drive assembly according to claim 1, **characterized in that** in the installation position of the drive assembly in the motor vehicle the drive shaft (31) of the electric motor (30) is arranged in front of the ring gear axis (63) as viewed in the direction of travel.

3. Drive assembly according to claim 1 or 2, **characterized in that** the auxiliary transmission (50) has a first idler gear (60) and a second idler gear (61) which are arranged next to one another on the second shaft (52).

4. Drive assembly according to claim 3, **characterized in that** a double-speed clutch (61) is arranged between the first idler gear (60) and the second idler gear (61), which clutch connects the first idler gear (60) in a first shift position and the second idler gear (61) in a second shift position to the second shaft (52) in a rotationally secure manner.

5. Drive assembly according to claim 3 or 4, **characterized in that** the first idler gear (60) and the second idler gear (61) are arranged, as viewed in axial direction, between a plane in which the drive gear (59) of the electric motor (30) lies and a plane in which the second pinion (53) lies.

6. Drive assembly according to any one of claims 1 to 5, **characterized in that** a distance between the drive shaft (31) of the electric motor (30) and the input shaft (11) is smaller than the distance between the input shaft (11) and the ring gear axis (63).

7. Drive assembly according to any one of claims 1 to 6, **characterized in that** a distance between the ring gear axis (63) and the drive shaft (31) of the electric motor (30) is greater than a distance between the ring gear axis (63) and the input shaft (11) of the main transmission (10).

8. Drive assembly according to any one of claims 1 to 7, **characterized in that** the main transmission (10) has a second output shaft with a third pinion for implementing a reverse gear which pinion meshes with the ring gear (14).

9. Drive assembly according to any one of claims 1 to 8, **characterized in that** the first output shaft (12) and the input shaft (11) are arranged above a second straight connecting line (6), which extends between the drive shaft (31) of the electric motor (30) and the ring gear axis (63) of the ring gear (14), and **in that** the first shaft (51) and the second shaft (52) are arranged below the second straight connecting line (6).

## Revendications

1. Groupe motopropulseur pour un véhicule automobile comprenant :
- une transmission principale (10) qui présente un arbre d'entrée (11) qui peut se coupler à un moteur à combustion interne (1) du véhicule automobile, au moins un premier arbre de sortie (12), sur lequel un premier pignon (13) est agencé de manière solidaire en rotation, une couronne (14) rotative autour d'un axe de couronne (63) qui est en prise d'engrènement avec le premier pignon (13) et qui peut être couplée à au moins un arbre de sortie (3, 4) du véhicule automobile, et plusieurs rapports embrayables, dans lequel un assemblage de roues dentées est associé à un rapport, assemblage qui comprend une roue fixe et une roue libre embrayable afin de transmettre un couple du moteur à combustion interne (1) de l'arbre d'entrée (11) à l'arbre de sortie (12),
- un moteur électrique (30) qui présente un arbre d'entraînement (31) parallèle à l'arbre d'entrée (11), au premier arbre de sortie (12) et à l'axe de couronne (63), et
- une transmission secondaire (50) qui présente une roue dentée d'entraînement (59) agencé sur l'arbre d'entraînement (31) du moteur électrique, au moins un premier arbre (51) et un second arbre (52) sur lequel un deuxième pignon (53) est agencé, qui est en prise d'engrènement avec la couronne (14) de la transmission principale (10), dans lequel la transmission de couple de l'arbre d'entraînement (31) au second arbre (52) ne peut être transmise que par des roues dentées interagissant par une prise d'engrènement,
dans lequel
- l'arbre d'entraînement (31) du moteur électrique (30) est espacé respectivement de l'axe de couronne (63), de l'arbre d'entrée (11) et de l'arbre de sortie (12) de la transmission principale (10),
- le premier arbre de sortie (12) est agencé au-dessus d'une première droite de liaison (5) qui s'étend entre l'arbre d'entrée (11) et l'axe de couronne (63) de la couronne (14),
- l'arbre d'entraînement (31) du moteur électrique (30), le premier arbre (51) et le second arbre (52) sont agencés en dessous de la première droite de liaison (5), **caractérisé en ce que**
- un module de commande pour le moteur électrique (30) est agencé à côté du moteur électrique (30) vu dans le sens axial,
- la transmission secondaire (50) présente au moins deux rapports secondaires embrayables, dans lequel un assemblage de roues dentées est associé à un rapport secondaire qui comprend une roue fixe et une roue libre embrayable afin de transmettre un couple de l'arbre d'entraînement (31) du moteur électrique (30) au second arbre (51), la transmission secondaire (50) présente une roue intermédiaire (57) sur un arbre supplémentaire (58) qui s'engrène avec la roue dentée d'entraînement (59) du moteur électrique (30) et une roue dentée sur le premier arbre (51), et
- l'arbre supplémentaire (58) est agencé dans un espace intermédiaire entre le module de commande et le moteur électrique (30).

2. Groupe motopropulseur selon la revendication 1, **caractérisé en ce qu'**en position d'installation du groupe motopropulseur dans le véhicule automobile, l'arbre d'entraînement (31) du moteur électrique (30) est agencé avant l'axe de couronne (63) vu dans le sens de la marche.

3. Groupe motopropulseur selon la revendication 1 ou 2, **caractérisé en ce que** la transmission secondaire (50) présente une première roue libre (60) et une seconde roue libre (61) qui sont agencées l'une à côté de l'autre sur le second arbre (52).

4. Groupe motopropulseur selon la revendication 3, **caractérisé en ce qu'**un embrayage à rapport double (61) est agencé entre la première roue libre (60) et la seconde roue libre (61) qui relie dans une première position d'embrayage la première roue libre (60) et dans une seconde position d'embrayage la seconde roue libre (61) de manière solidaire en rotation au second arbre (52).

5. Groupe motopropulseur selon la revendication 3 ou 4, **caractérisé en ce que** la première roue libre (60) et la seconde roue libre (61) sont agencées, vu dans le sens axial, entre un plan dans lequel se trouve la roue dentée d'entraînement (59) du moteur électrique (30) et un plan dans lequel se trouve le deuxième pignon (53).

6. Groupe motopropulseur selon l'une quelconque des revendications 1 à 5, **caractérisé en ce qu'**une distance entre l'arbre d'entraînement (31) du moteur électrique (30) et l'arbre d'entrée (11) est inférieure à la distance entre l'arbre d'entrée (11) et l'axe de couronne (63).

7. Groupe motopropulseur selon l'une quelconque des revendications 1 à 6, **caractérisé en ce qu'**une distance entre l'axe de couronne (63) et l'arbre d'entraînement (31) du moteur électrique (30) est supérieure à une distance entre l'axe de couronne (63) et l'arbre d'entrée (11) de la transmission principale (10).

8. Groupe motopropulseur selon l'une quelconque des revendications 1 à 7, **caractérisé en ce que** la transmission principale (10) présente pour la réalisation d'une marche arrière un second arbre de sortie avec un troisième pignon qui s'engrène avec la couronne (14).

9. Groupe motopropulseur selon l'une quelconque des revendications 1 à 8, **caractérisé en ce que** le premier arbre de sortie (12) et l'arbre d'entrée (11) sont agencés au-dessus d'une seconde droite de liaison (6) qui s'étend entre l'arbre d'entraînement (31) du moteur électrique (30) et l'axe de couronne (63) de la couronne (14), et **en ce que** le premier arbre (51) et le second arbre (52) sont agencés en dessous de la seconde droite de liaison (6).
